# EUROPÄISCHE PATENTSCHRIFT

(11) **EP 2 634 598 B1**
(45) Veröffentlichungstag und Bekanntmachung des Hinweises auf die Patenterteilung: **04.04.2018**
(21) Anmeldenummer: 12199022.0
(22) Anmeldetag: 21.12.2012
(51) Int. Cl.: G01S 17/02, G01S 7/497

(54) **Optischer Sensor**
Optical sensor
Capteur optique

(30) Priorität: 31.01.2012 DE 102012100747
(43) Veröffentlichungstag der Anmeldung: 04.09.2013
(73) Patentinhaber: Leuze electronic GmbH + Co KG, 73277 Owen/Teck (DE)
(72) Erfinder: Graß, Dietmar, 72639 Neuffen (DE); Huß, Jörg, 73230 Kirchheim/Teck (DE)
(74) Vertreter: Ruckh, Rainer Gerhard

(56) Entgegenhaltungen:
- EP-A1- 0 075 045
- EP-A2- 2 392 941
- DE-A1-102006 057 878
- DE-A1-102011 014 195

## Beschreibung

Die Erfindung betrifft einen optischen Sensor gemäß dem Oberbegriff des Anspruchs 1.

Derartige optische Sensoren sind insbesondere in Form von Lichttastern ausgebildet. Mit einem derartigen Lichttaster wird ein in einen Überwachungsbereich eindringendes Objekt generell dadurch erkannt, dass die von der Sendeeinheit emittierten Sendelichtstrahlen zum Objekt reflektiert und als Empfangslichtstrahlen zur Empfangseinheit des optischen Sensors geführt werden.

Mit derartigen Lichttastern können allgemein diffus reflektierende Objekte sicher erkannt werden. Problematisch bei derartigen Lichttastern ist jedoch die Detektion von glänzenden, das Licht zumindest teilweise gerichtet reflektierenden Objekten. Der gerichtet reflektierende Anteil des Lichts gelangt nur bei einer bestimmten Sensor- beziehungsweise Objektneigung zurück zum Lichttaster. Daher wird üblicherweise bei der Detektion derartiger glänzender Objekte nur der diffus reflektierte Anteil des Sendelichts ausgewertet, was die Detektionssicherheit derartiger Objekte erheblich reduziert.

Aus der DE 10 2006 057 878 A1 ist eine optoelektronische Vorrichtung bekannt, welche mindestens einen ein Sendelichtstrahlbündel emittierenden Sender, einen eine Linearanordnung von Empfangselementen aufweisenden Empfänger, eine dem Empfänger vorgeordnete Empfangsoptik und eine Auswerteeinheit zur Auswertung der Empfangssignale des Empfängers umfasst. Durch eine Amplitudenbewertung der Empfangssignale sind selektiv glänzende Objekte erfassbar. Mittels optischer Mittel zur Führung von an einem glänzenden Objekt reflektiertem Sendelichtstrahlbündel werden zwei Empfangslichtflecke auf dem Empfänger generiert, deren Abstand ein Maß für die Objektdistanz ist.

Durch die kombinierte Auswertung der Amplituden der Empfangssignale und der Lagen der Empfangslichtflecke auf dem Empfänger können glänzende Objekte selektiv erfasst, das heißt von diffus reflektierenden Objekten unterschieden werden.

Nachteilig hierbei ist jedoch, dass für eine selektive Detektion von glänzenden Objekten eine Distanzmessung durchgeführt werden muss, wobei zur Durchführung der Distanzmessung eine definierte Aufsplitterung des Empfangslichtstrahlenbündels durchgeführt werden muss, was relativ aufwändig ist.

Die EP 2 392 941 A2 betrifft einen Lichttaster in V-Anordnung zur Erkennung von Objekten in einem Nachweisabstand mit einem ersten Lichtsender und einem zugehörigen ersten Lichtempfänger, die derart zueinander angeordnet sind, dass ihre optischen Achsen V-förmig in einem V-Winkel zueinander stehen und sich in dem Nachweisabstand schneiden. Mit einer ersten Auswertungseinheit wird ein Ausgangssignal des ersten Lichtempfängers bewertet, um über die Anwesenheit eines Objekts in dem Nachweisabstand zu entscheiden. Weiterhin ist ein zweiter Lichtsender angegeben. Dabei fällt die optische Achse des zweiten Lichtsenders mit derjenigen des ersten Lichtempfängers zusammen, so dass Sendelichtflecken des ersten Lichtsenders und des zweiten Lichtsenders in dem Nachweisabstand zur Deckung kommen.

Die DE 10 2011 014 195 A1 betrifft einen optischen Sensor. Der optische Sensor umfasst einen Reflexlichttaster mit einem Sendelichtstrahlen emittierenden Sender, einem Empfangslichtstrahlen empfangenden Empfänger und einer Auswerteeinheit, in welcher in Abhängigkeit der Empfangssignale des Empfängers ein Objektfeststellungssignal generiert wird. Dem Reflexlichttaster ist wenigstens ein Sendelichtstrahlen emittierender Zusatzsender zugeordnet, welcher eine Einheit ohne eigene Auswertung und Empfangseinheit bildet. Die vom Zusatzsender emittierten Sendelichtstrahlen werden mit dem Empfänger des Reflexlichttasters ausgewertet. Der Sender und der oder jeder Zusatzsender emittieren Sendelichtimpulse mit unterschiedlichen Sendefrequenzen.

Die EP 0 075 045 A1 betrifft eine Reflexionslichtschranke. Bei dieser Reflexionslichtschranke verläuft die optische Achse nicht senkrecht zur Grundfläche des Gehäuses. Es besteht vielmehr eine Neigung von etwa 5 Grad zur Senkrechten, so dass vom Gegenstand ausgehende Reflektionen nicht in das optische System zurückreflektiert werden. Es wird daher auch ein stark reflektierender Gegenstand von der Reflexlichtschranke sicher festgestellt.

Der Erfindung liegt die Aufgabe zugrunde, einen optischen Sensor der eingangs genannten Art bereitzustellen, bei welchen mit geringem konstruktivem Aufwand eine sichere Detektion von glänzenden Objekten gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optischer Sensor umfasst nur eine Sendeeinheit, mittels derer in Richtung einer Sendestrahlachse verlaufende Sendelichtstrahlen emittiert werden, sowie nur eine eine Empfangsstrahlachse aufweisende Empfangseinheit, mittels derer Sendelichtstrahlen, die von einem zu detektierenden Objekt als Empfangslichtstrahlen reflektiert und in Richtung der Empfangsstrahlachse verlaufen, detektiert werden. Mit einer Auswerteeinheit wird in Abhängigkeit von Empfangssignalen am Ausgang der Empfangseinheit ein Objektfeststellungssignal generiert. Zwischen Sendestrahlachse und der Empfangsstrahlachse sind Mittel zur Einstellung des Neigungswinkels vorgesehen, wobei durch Vorgabe eines Neigungswinkels ein Detektionsbereich für glänzende Objekte vorgebbar ist. Die Einstellung des Detektionsbereichs erfolgt in Abhängigkeit einer Kennlinie, die Einstellwerte für unterschiedliche Glanzgrade von Objekten und/oder unterschiedliche Distanzbereiche definiert.

Ein wesentlicher Vorteil des erfindungsgemäßen optischen Sensors besteht darin, dass allein durch die mechanische Einstellung der Neigung der Sendestrahlachse zur Empfangsstrahlachse ein definierter Detektionsbereich erhalten wird, in welchem eine sichere Detektion von glänzenden Objekten möglich ist. Hierzu sind lediglich entsprechende mechanische Einstellvorrichtungen für die Sendeeinheit und/oder die Empfangseinheit des optischen Sensors vorzusehen. Jedoch müssen hinsichtlich der Ausbildung der optischen und elektronischen Komponenten oder auch hinsichtlich der Signalauswertung in der Auswerteeinheit keine zusätzlichen Aufwendungen vorgesehen sein, um eine sichere Detektion von glänzenden Objekten zu gewährleisten.

Während bei optischen Sensoren, die mit einer feststehenden Sendestrahlachse der Sendeeinheit und mit einer feststehenden Empfangsstrahlachse der Empfangseinheit arbeiten, ein glänzendes Objekt typischerweise nur in einer bestimmten Distanz vom optischen Sensor erkannt werden kann, kann bei dem erfindungsgemäßen optischen Sensor durch die Verstellmöglichkeit der Sendestrahlachse und/oder der Empfangsstrahlache die Distanz, in welcher ein glänzendes Objekt erfasst werden kann, flexibel vorgegeben werden. Dabei ist besonders vorteilhaft, dass durch eine geeignete Einstellung der Neigung der Sendestrahlachse relativ zur Empfangsstrahlachse glänzende Objekte nicht nur in einer bestimmten Distanzsensoren in einem ausgedehnten Distanzbereich sicher erfasst werden können. Dabei können sogar Verkippungen der Objektoberfläche eines Objekts in einem gewissen Winkelbereich, der typisch von +10° bis -10° bezogen auf die Normale des optischen Sensors betragen kann, auftreten, ohne die Detektion des Objekts zu beeinträchtigen.

Besonders vorteilhaft erfolgt die Einstellung des Detektionsbereichs in Abhängigkeit einer Kennlinie, die Einstellwerte für unterschiedliche Glanzgrade von Objekten und/oder unterschiedliche Distanzbereiche definiert, wobei insbesondere die Kennlinie in einem Datenblatt definiert ist.

Ein Benutzer kann somit gezielt einen Detektionsbereich für bestimmte glänzende Objekte vorgeben. Damit kann der erfindungsgemäße optische Sensor optimal für spezifische Applikationen eingestellt werden.

Generell kann eine solche Einstellung werkseitig vor Auslieferung erfolgen. Weiterhin kann die Einstellung auch von einem Benutzer des optischen Sensors an dessen Einsatzort erfolgen.

Durch die Einstellung des Detektionsbereichs für glänzende Objekte ergibt sich zwangsläufig auch ein Detektionsbereich, in dem diffus reflektierende Objekte erfasst werden können. Die relativen Lagen beider Detektionsbereiche variieren in Abhängigkeit der jeweiligen Einstellungen der Sendestrahlachse und der Empfangsstrahlachse.

Die Einstellung erfolgt dabei immer derart, dass die Strahlachse geneigt zur Empfangsstrahlachse verläuft, so dass sich in einer bestimmten Distanz die Sendestrahlachse und Empfangsstrahlachse schneiden. Die Detektionsbereiche sowohl zur Detektion von glänzenden als auch von diffus reflektierenden Objekten liegen vor dem Schnittpunkt der Sendestrahlachse und der Empfangsstrahlachse, das heißt in geringeren, Distanzen als die Distanz des Schnittpunkts zum optischen Sensor. In dem Bereich hinter diesem Schnittpunkt kann überhaupt keine Objektdetektion erfolgen. Dieser Bereich bildet somit einen Hintergrund, der von der Objektdetektion ausgeschlossen ist, das heißt durch die Vorgabe der Neigung zwischen Sendestrahlachse und Empfangsstrahlachse wird eine definierte Hintergrundausblendung für den optischen Sensor erhalten. Prinzipiell ist auch eine komplementäre Anordnung möglich, bei der eine Objektdetektion nur in einem begrenzten oder unbegrenzten Hintergrundbereich erfolgt.

Gemäß einer vorteilhaften Ausgestaltung der Erfindung weist die Sendeeinheit einen Sendelichtstrahlen emittierenden Sender und eine diesem zugeordnete Sendeoptik auf. Zur Einstellung des Neigungswinkels sind zwischen Sendestrahlachse und Empfangsstrahlachse Mittel zur Verstellung der Position des Senders und/oder der Sendeoptik vorgesehen.

Damit können, je nach Ausbildung von Verstelleinrichtungen, der Sender und die Sendeoptik einzeln verstellt werden oder auch in Kombination, wobei bevorzugt dann eine definierte Relativstellung zwischen Sender und Empfangsoptik eingestellt werden kann.

Alternativ oder zusätzlich weist die Empfangseinheit einen Empfangslichtstrahlen empfangenden Empfänger und eine diesem zugeordnete Empfangsoptik auf. Zur Einstellung des Neigungswinkels sind zwischen Sendestrahlachse und Empfangsstrahlachse Mittel zur Verstellung der Position des Empfängers und/oder der Empfangsoptik vorgesehen.

Damit können, je nach Ausbildung von Verstelleinrichtungen, der Empfänger und die Empfangsoptik einzeln verstellt werden oder auch in Kombination, wobei bevorzugt dann eine definierte Relativstellung zwischen Empfänger und Empfangsoptik eingestellt werden kann.

Prinzipiell ist es auch möglich, dass die Einstellung der Sendestrahlachse mit der Einstellung der Empfangsstrahlachse gekoppelt ist, so dass durch ein Einstellmittel sowohl die Sendestrahlachse als auch die Empfangsstrahlachse verstellt wird, beispielsweise um stets eine symmetrische Verstellung der Sendestrahlachse und Empfangsstrahlachse zu erhalten.

Die Erfindung wird im Folgenden anhand der Zeichnungen erläutert. Es zeigen:
- Figur 1:: Schematische Darstellung eines ersten Ausführungsbeispiels des erfindungsgemäßen optischen Sensors.
- Figur 2:: Darstellung des optischen Sensors gemäß Figur 1 mit der Sendestrahlachse der Sendeeinheit und der Empfangsstrahlachse der Empfangseinheit.
- Figur 3:: Skizze zur Beschreibung der Definition des Begriffes Glanz.
- Figur 4:: Vorgabe unterschiedlicher Bereiche für den optischen Sensor gemäß Figur 1.

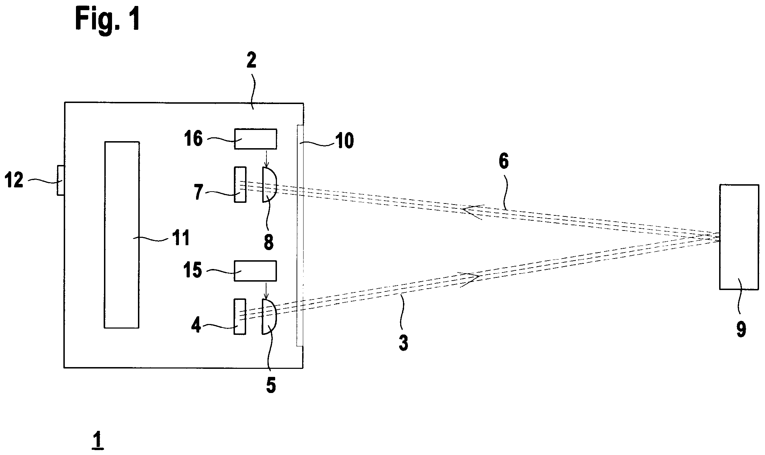

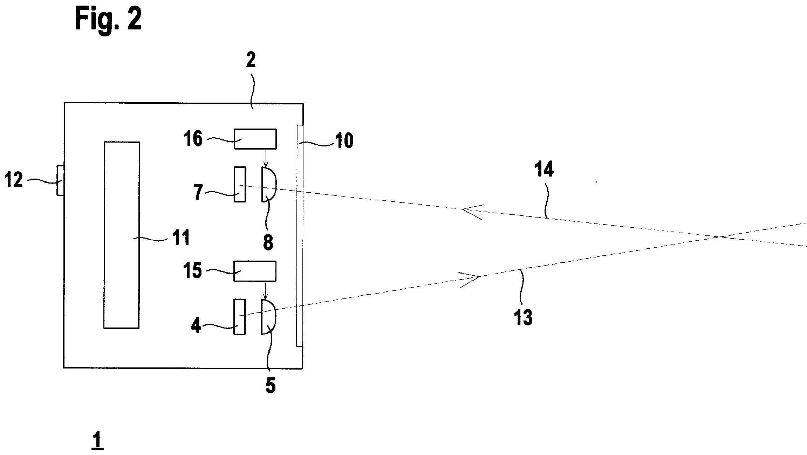

Die Figuren 1 und 2 zeigen schematisch den Aufbau eines Ausführungsbeispiels des erfindungsgemäßen optischen Sensors 1. Der optische Sensor 1 ist im vorliegenden Fall als Lichttaster ausgebildet. Die Komponenten des optischen Sensors 1 sind in beziehungsweise an einem gemeinsamen Gehäuse 2 vorgesehen. Der optische Sensor 1 weist als Optikeinheiten eine Sendeeinheit mit einem Sendelichtstrahlen 3 emittierenden Sender 4 und einer Sendeoptik 5 sowie eine Empfangseinheit mit einem Empfangslichtstrahlen 6 empfangenden Empfänger 7 und einer Empfangsoptik 8 auf. Der Sender 4 besteht aus einer Leuchtdiode, Laserdiode, UV-Diode, Infrarot Diode oder dergleichen. Der Empfänger 7 besteht vorzugsweise aus einem lichtempfindlichen Empfangselement wie einer Photodiode. Die Sendeoptik 5 dient zur Strahlformung der Sendelichtstrahlen 3 und ist von einer Linse gebildet. Die Empfangsoptik 8 dient zur Fokussierung der Empfangslichtstrahlen 6 auf den Empfänger 7 und ist ebenfalls von einer Linse gebildet. Insbesondere für die Detektion lumineszierender Objekte kann im Empfangslichtstrahlengang eine optische Befilterung vorgesehen sein

Zur Detektion eines Objekts 9 werden die Sendelichtstrahlen 3, die ein Strahlenbündel mit einem definierten Strahlquerschnitt bilden, wie in Figur 1 dargestellt, durch ein Fenster 10 in der Frontwand des Gehäuses 2 geführt. Die Sendelichtstrahlen 3 werden an der Oberfläche des Objekts 9 reflektiert und gelangen als Empfangslichtstrahlen 6 durch das Fenster 10 und über die Empfangsoptik 8 zum Empfänger 7.

Die dadurch am Ausgang des Empfängers 7 generierten Empfangssignale werden in einer Auswerteeinheit 11 ausgewertet, welche bevorzugt auch den Sender 4 steuert. Die Auswerteeinheit 11 ist von einem Mikroprozessor oder dergleichen gebildet. In Abhängigkeit der Empfangssignale wird dabei in der Auswerteeinheit 11 ein Objektfeststellungssignal generiert, welches über einen Schaltausgang 12 ausgegeben wird. Im vorliegenden Fall wird in der Auswerteeinheit 11 durch eine Schwellwertbewertung der Empfangssignale als Objektfeststellungssignal ein binäres Schaltsignal generiert, dessen Schaltzustände angeben, ob sich ein Objekt 9 im Überwachungsbereich befindet oder nicht.

Der optische Sensor 1 bildet, wie insbesondere Figur 2 zeigt, einen sogenannten V-Taster, bei welchem die Sendestrahlachsen 13 der Sendeeinheit und die Empfangsstrahlachsen 14 der Empfangseinheit räumlich getrennt und in einem Neigungswinkel geneigt zueinander verlaufen.

Die Orientierung der Sendestrahlachse 13, entlang derer die Sendelichtstrahlen 3 im Überwachungsbereich verlaufen, wird durch die optischen Achsen des Senders 4 und der Sendeoptik 5 sowie durch die Relativposition von Sender 4 und Sendeoptik 5 vorgegeben.

Die Orientierung der Empfangsstrahlachse 14 wird entsprechend durch die optischen Achsen des Empfängers 7 und der Empfangsoptik 8 sowie durch die Relativposition von Empfänger 7 und Empfangsoptik 8 vorgegeben.

Bei dem erfindungsgemäßen optischen Sensor 1 sind die Sendestrahlachsen 13 und Empfangsstrahlachsen 14 und damit der Neigungswinkel zwischen der Sendestrahlachse 13 und Empfangsstrahlachse 14 einstellbar. Im vorliegenden Fall sind hierzu ein Stellelement 15 zur Verschiebung der Sendeoptik 5 quer zu deren optischer Achse und ein Stellelement 16 zur Verschiebung der Empfangsoptik 8 quer zu deren optischer Achse vorgesehen. Jedes Stellelement 15, 16 ist separat über ein Bedienelement an der Außenseite des Gehäuses 2 betätigbar. Prinzipiell können die Stellelemente 15, 16 auch gekoppelt sein und durch eine einzelne Bedienvorrichtung betätigt werden, beispielsweise derart, dass die Sendeoptik 5 und Empfangsoptik 8 immer gegenläufig bewegt werden, so dass die Neigungsverstellung der Sendestrahlachse 13 und der Empfangsstrahlachse 14 symmetrisch zur Oberflächennormalen der ebenen Frontwand des Gehäuses 2 erfolgt.

Generell können als Mittel zur Einstellung der Sendestrahlachse 13 auch Einstellvorrichtungen vorgesehen sein, mittels derer zusätzlich oder alternativ zur Verschiebung der Sendeoptik 5 auch eine Verschiebung des Senders 4 möglich ist.

Ebenso können als Mittel zur Einstellung der Empfangsstrahlachse 14 auch Einstellvorrichtungen vorgesehen sein, mittels derer zusätzlich oder alternativ zur Verschiebung der Empfangsoptik 8 auch eine Verschiebung des Empfängers 7 möglich ist.

Durch die Einstellung des Neigungswinkels kann erfindungsgemäß ein Detektionsbereich, das heißt ein Distanzbereich vorgesehen werden, innerhalb dessen glänzende Objekte 9 sicher detektiert werden können.

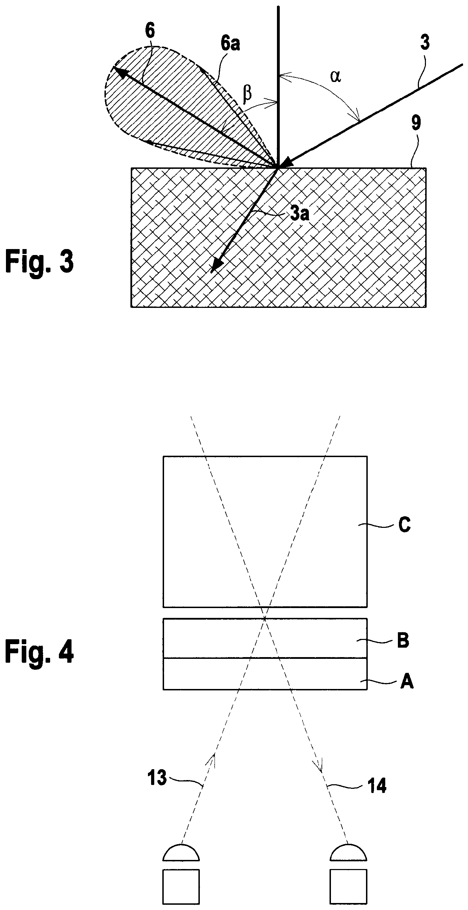

Der Begriff "Glanz" wird im Folgenden an Hand von Figur 3 beschrieben werden.

Glanz ist die Eigenschaft einer Oberfläche, einfallende Lichtstrahlen mehr oder minder gerichtet zu reflektieren. Je mehr Lichtstrahlen von einer Oberfläche gerichtet reflektiert werden, desto glatter und glänzender ist diese.

Der Glanzgrad einer Oberfläche ist definiert als der Quotient aus dem gerichtet und dem diffus reflektierten Anteil des auffallenden Lichts. Die praktische Bestimmung des Glanzgrades erfolgt nach DIN 537781 in den sechs Glanzgraden: hochglänzend, glänzend, seidenglänzend, seidenmatt, matt, und stumpfmatt.

Wie aus Figur 3 ersichtlich, bildet das Bündel der einfallenden Sendelichtstrahlen 3 zur Flächennormalen des Objektes 9 den Einfallswinkel α. Der Ausfallwinkel ist mit β bezeichnet.
a) Ist das Objekt 9 transparent, wird das Bündel der Sendelichtstrahlen 3 gebrochen und mit ca. 95% der Intensität als gebrochener Strahl 3a weitergeleitet. Ein Anteil mit ca. 4% wird mit dem Ausfallwinkel β vom Objekt 9 reflektiert.
b) Ist das Objekt 9 nichttransparent und hochglänzend, wird das gesamte Sendelicht mit dem Ausfallwinkel β vom Objekt 9 reflektiert.
c) Ist das Objekt 9 nichttransparent und seidenmatt bis glänzend, bildet sich um den reflektierten Empfangslichtstrahl 6 Streustrahlung 6a. Ein Anteil der Sendelichtstrahlen 3 wird je nach Glanzgrad durch das Objekt 9 absorbiert.
d) Ist das Objekt 9 nichttransparent und stumpfmatt bis matt, wird der überwiegende Teil der Sendelichtstrahlen 3 absorbiert und ein geringer Anteil diffus in den Halbraum reflektiert.

Durch eine geeignete Einstellung der Sendestrahlachse 13 und der Empfangsstrahlachse 14 wird als Detektionsbereich, innerhalb dessen glänzende Objekte 9 erkannt werden können, ein ausgedehnter Distanzbereich erhalten. Dies ist in Figur 4 veranschaulicht, wo der Detektionsbereich, innerhalb dessen glänzende Objekte 9 erkannt werden können, mit A bezeichnet ist. Durch diese Einstellung der Sendestrahlachse 13 und der Empfangsstrahlachse 14 ist zugleich auch ein Detektionsbereich definiert, innerhalb dessen diffus reflektierende Objekte 9 sicher erkannt werden können. Dieser in Figur 4 mit B bezeichnete Detektionsbereich schließt zu größeren Distanzen hin an den Bereich A an. Der Bereich B erstreckt sich bis kurz vor den Schnittpunkt der Sendestrahlachse 13 und der Empfangsstrahlachse 14. Dieser Schnittpunkt stellt generell den Grenzabstand für eine Objektdetektion dar. Dies bedeutet, dass der in Figur 4 mit C bezeichnete Bereich einen Hintergrundbereich bildet, innerhalb dessen keine Objekte 9 mehr erkannt werden.

Somit ergibt sich durch die Einstellung des Neigungswinkels zwischen der Sendestrahlachse 13 und der Empfangsstrahlachse 14 nicht nur ein definierter Detektionsbereich zur Detektion von glänzenden Objekten 9. Vielmehr wird zugleich das Hintergrundverhalten des optischen Sensors 1 vorgegeben, das heißt eine Hintergrundausblendung derart eingestellt, dass Objekte 9 im Hintergrundbereich (Bereich C) nicht zu Objektmeldungen führen.

Die Einstellung der Detektionsbereiche kann prinzipiell werksseitig vor Auslieferung des optischen Sensors 1 oder nach Auslieferung des optischen Sensors 1 durch den jeweiligen Benutzer erfolgen. Zweckmäßig werden hierzu ein oder mehrere Kennlinien, beispielsweise auf dem Datenblatt des optischen Sensors 1, dem jeweiligen Bedienpersonal als Einstellhilfe vorgegeben. Eine derartige Kennlinie kann beispielsweise für bestimmte Detektionsbereiche und/oder Glanzgrade von Objekten 9 bestimmte Solleinstellungen für die Stellelemente 15, 16 vorgeben.

### Bezugszeichenliste

- (1): Optischer Sensor
- (2): Gehäuse
- (3): Sendelichtstrahlen
- (3a): Strahl
- (4): Sender
- (5): Sendeoptik
- (6): Empfangslichtstrahlen
- (7): Empfänger
- (8): Empfangsoptik
- (9): Objekt
- (10): Fenster
- (11): Auswerteeinheit
- (12): Schaltausgang
- (13): Sendestrahlachse
- (14): Empfangsstrahlachse
- (15): Stellelement
- (16): Stellelement

## Patentansprüche

1. Optischer Sensor (1) mit nur einer Sendeeinheit, mittels derer in Richtung einer Sendestrahlachse (13) verlaufende Sendelichtstrahlen (3) emittiert werden, mit nur einer eine Empfangsstrahlachse (14) aufweisenden Empfangseinheit, mittels derer Sendelichtstrahlen (3), die von einem zu detektierenden Objekt (9) als Empfangslichtstrahlen (6) reflektiert und in Richtung der Empfangsstrahlachse (14) verlaufen, detektiert werden, und mit einer Auswerteeinheit (11), in welcher in Abhängigkeit von Empfangssignalen am Ausgang der Empfangseinheit ein Objektfeststellungssignal generiert wird, und mit Mittel zur Einstellung des Neigungswinkels zwischen Sendestrahlachse (13) und der Empfangsstrahlachse (14), wobei durch Vorgabe eines Neigungswinkels ein Detektionsbereich für glänzende Objekte (9) vorgebbar ist, und wobei die Einstellung des Detektionsbereichs in Abhängigkeit einer Kennlinie erfolgt, die Einstellwerte für unterschiedliche Glanzgrade von Objekten (9) und/oder unterschiedliche Distanzbereiche definiert.

2. Optischer Sensor nach Anspruch 1, **dadurch gekennzeichnet, dass** mit der Einstellung des Neigungswinkels zwischen Sendestrahlachse (13) und Empfangsstrahlachse (14) eine spezifische Hintergrundausblendung vorgebbar ist.

3. Optischer Sensor nach einem der Ansprüche 1 oder 2, **dadurch gekennzeichnet, dass** die Sendeeinheit einen Sendelichtstrahlen (3) emittierenden Sender (4) und eine diesem zugeordnete Sendeoptik (5) aufweist.

4. Optischer Sensor nach Anspruch 3, **dadurch gekennzeichnet, dass** als Mittel zur Einstellung des Neigungswinkels zwischen Sendestrahlachse (13) und Empfangsstrahlachse (14) Mittel zur Verstellung der Position des Senders (4) und/oder der Sendeoptik (5) vorgesehen sind.

5. Optischer Sensor nach einem der Ansprüche 1 bis 4, **dadurch gekennzeichnet, dass** die Empfangseinheit einen Empfangslichtstrahlen (6) empfangenden Empfänger (7) und eine diesem zugeordnete Empfangsoptik (8) aufweist.

6. Optischer Sensor nach Anspruch 5, **dadurch gekennzeichnet, dass** als Mittel zur Einstellung des Neigungswinkels zwischen Sendestrahlachse (13) und Empfangsstrahlachse (14) Mittel zur Verstellung der Position des Empfängers (7) und/oder der Empfangsoptik (8) vorgesehen sind.

7. Optischer Sensor nach einem der Ansprüche 1 bis 6, **dadurch gekennzeichnet, dass** die Kennlinie in einem Datenblatt definiert ist.

8. Optischer Sensor nach Anspruch 7, **dadurch gekennzeichnet, dass** dieser ein Lichttaster ist.

## Claims

1. Optical sensor (1) with only one transmitting unit, by means of which transmitted light beams (3) running in the direction of a transmitted beam axis (13) are emitted, with only one receiving unit, which has a received beam axis (14) and by means of which transmitted light beams (3) reflected as received light beams (6) from an object (9) to be detected and running in the direction of the receiving beam axis (14) are detected, and with an evaluating unit (11) in which an object detection signal is generated in dependence on received signals at the output of the receiving unit, and with means for setting the angle of inclination between transmitted beam axis (13) and the received beam axis (14), wherein a detection range for bright objects (9) is predeterminable by presetting an angle of inclination and wherein the setting of the detection range is carried out in dependence on a characteristic curve defining setting values for different degrees of brightness of objects (9) and/or different distance ranges.

2. Optical sensor according to claim 1, **characterised in that** a specific cutting out of background is predeterminable by the setting of the angle of inclination between transmitted beam axis (13) and received beam axis (14).

3. Optical sensor according to one of claims 1 and 2, **characterised in that** the transmitting unit comprises a transmitter (4), which emits transmitted light beams (3), and a transmitting optical system (5) associated therewith.

4. Optical sensor according to claim 3, **characterised in that** means for adjusting the position of the transmitter (4) and/or the transmitting optical system (5) are provided as means for setting the angle of inclination between transmitted beam axis (13) and received beam axis (14).

5. Optical sensor according to any one of claims 1 to 4, **characterised in that** the receiving unit comprises a receiver (7), which receives received light beams (6), and a receiving optical system associated therewith.

6. Optical sensor according to claim 5, **characterised in that** means for adjusting the position of the receiver (7) and/or the receiving optical system (8) are provided as means for setting the angle of inclination between transmitted light beam axis (13) and received beam axis (14).

7. Optical sensor according to any one of claims 1 to 6, **characterised in that** the characteristic curve is defined in a data sheet.

8. Optical sensor according to claim 7, **characterised in that** this is an optical scanner.

## Revendications

1. Capteur optique (1) avec une seule unité émettrice, au moyen de laquelle sont émis des rayons lumineux d'émission (3) s'étendant dans la direction d'un axe de rayons d'émission (13), avec une seule unité réceptrice présentant un axe de rayons de réception (14), au moyen de laquelle des rayons lumineux d'émission (3), qui sont réfléchis par un objet (9) à détecter en tant que rayons lumineux de réception (6) et s'étendent dans la direction de l'axe de rayons de réception (14), sont détectés, et avec une unité d'évaluation (11), dans laquelle un signal de détection d'objet est généré en fonction des signaux de réception à la sortie de l'unité réceptrice, et avec des moyens pour régler l'angle d'inclinaison entre l'axe de rayons d'émission (13) et l'axe de rayons de réception (14), dans lequel, par définition d'un angle d'inclinaison, une zone de détection pour des objets (9) brillants peut être définie, et dans lequel le réglage de la zone de détection s'effectue en fonction d'une courbe caractéristique qui définit les valeurs de réglage pour différents degrés de brillance d'objets (9) et/ou différentes plages de distance.

2. Capteur optique selon la revendication 1, **caractérisé en ce que** le réglage de l'angle d'inclinaison entre l'axe de rayons d'émission (13) et l'axe de rayons de réception (14) permet de définir une élimination spécifique de l'arrière-plan.

3. Capteur optique selon l'une des revendications 1 ou 2, **caractérisé en ce que** l'unité émettrice présente un émetteur (4) émettant des rayons lumineux d'émission (3) et une optique d'émission (5) associée à celui-ci.

4. Capteur optique selon la revendication 3, **caractérisé en ce que** des moyens pour régler la position de l'émetteur (4) et/ou de l'optique d'émission (5) sont prévus comme moyens de réglage de l'angle d'inclinaison entre l'axe de rayons d'émission (13) et l'axe de rayons de réception (14).

5. Capteur optique selon l'une des revendications 1 à 4, **caractérisé en ce que** l'unité réceptrice présente un récepteur (7) recevant des rayons lumineux de réception (6) et une optique de réception (8) associée à celui-ci.

6. Capteur optique selon la revendication 5, **caractérisé en ce que** des moyens pour régler la position du récepteur (7) et/ou de l'optique de réception (8) sont prévus comme moyens de réglage de l'angle d'inclinaison entre l'axe de rayons d'émission (13) et l'axe de rayons de réception (14).

7. Capteur optique selon l'une des revendications 1 à 6, **caractérisé en ce que** la courbe caractéristique est définie dans une fiche technique.

8. Capteur optique selon la revendication 7, **caractérisé en ce que** celui-ci est un détecteur photosensible.
